# NEUE EUROPÄISCHE PATENTSCHRIFT

(11) **EP 1 379 322 B2**
(45) Veröffentlichungstag und Bekanntmachung des Hinweises auf die Entscheidung über den Einspruch: **04.04.2012**
(45) Hinweis auf die Patenterteilung: 13.07.2005
(21) Anmeldenummer: 01274116.1
(22) Anmeldetag: 11.10.2001
(51) Int. Cl.: B01D 53/94, F01N 3/033, F01N 3/035

(54) **ABGASSYSTEM**
EXHAUST GAS SYSTEM
SYSTEME D'ECHAPPEMENT

(30) Priorität: 12.04.2001 DE 10118327
(43) Veröffentlichungstag der Anmeldung: 14.01.2004
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Kahlhöfer, Hermann
(86) Internationale Anmeldenummer: PCT/EP2001/011744
(87) Internationale Veröffentlichungsnummer: WO 2002/083274

(56) Entgegenhaltungen:
- EP-A- 0 341 832
- EP-A- 0 835 684
- EP-A- 1 055 805
- EP-A1- 1 057 519
- EP-A2- 0 341 832
- EP-A2- 1 072 765
- WO-A-00/34632
- WO-A1-01/12301
- WO-A1-01/80978
- WO-A1-91/01178
- WO-A1-98/34015
- WO-A1-99/58827
- DE-A1- 2 827 815
- DE-A1- 3 723 478
- DE-A1- 4 206 812
- PATENT ABSTRACTS OF JAPAN vol. 1997, no. 12, 25. Dezember 1997 (1997-12-25) & JP 09 222009 A (NIPPON SOKEN INC), 26. August 1997 (1997-08-26)
- W.M. Carty und P-W. Lednor, Monolithic ceramics and heterogeneous catalysts: honeycombs and foams, Current Opinion in Solid State & Material Science 1996, 1:88.95
- W.V. Twigg und J. T. Richardson, ?Preparation and properties of ceramic foam catalyst supports?, Preparation of Catalysts VI, 1995, Elsevier Science B.V.
- M.J. Matteson, C.W. Sandlin und 0. Preining, Diffusion of Aerosols at various Temperatures, in : Aerosol Science, 1973, Vol.4, pp. 307-315, Pergamon Press, Great Britain
- R.A. Mavliev, A.N. Ankilow, A.M. Baklanov, B.L. Gorbunov, NA Kakutkina, K.P. Kutsenogii, S.E. Pashchenko und Vi. Makarov (1983), Use of anet-like diffusion battery for determination of aerosol dispersion, Kolloinyl Zhumal, Vol. 46, Npp. 1136-1142, 1 83
- A.J. Breslin, S.F. Guggenheim und A.C. George, Kompakte Hochleistings- Diffusionsbatterien, In : Staub - Reinlufthaltung der Luft, Staubforschungsinstdes Hauptverbandes der gewerblichen Berufsgenossenschaften e.V., Bonn, Band 31, Nr. 8, S. 31 bis 354, Aug. 1971
- R. Bishop, Hybrid catalyst targets diesels, European Automotive Design, S. 27 bis 28, April 2001
- Dr. A Friedrich, Diesel Retrofit German Perspective, Presentation im Rahmen des California Diesel Risk Reduction Programm-Meeting Presentations, 03.11.2000
- SAE Technical Paper 2001-01-0189; New Approaches to Catalyst Substrate Application for Diesel Engines
- Taschenlexikon Chemie, 2. Auflage, Leipzig 1989, S.18 Adsorption
- SAE Technical Paper 2001-01-0189; New Approaches to Catalyst Substrate Application for Diesel Engines
- P.N. Hawker, Diesel Emission Control Technology, Platinum Metals Review, Vol. 39, No. 1, January 1995, pp. 2-8
- SAE Technical Paper 890404; Role of NO in Diesel Particulate Emission Control

## Beschreibung

Die vorliegende Erfindung betrifft ein Abgassystem zur Reinigung eines Abgases einer Verbrennungskraftmaschine, insbesondere zur Reinigung von Abgasen eines Dieselmotors eines Automobils.

Aufgrund gesetzlicher Bestimmungen, welche immer höhere Anforderungen an die Abgassysteme im Automobilbau stellen, wurden diese Abgassysteme in der Vergangenheit stetig weiter entwickelt. Dabei werden eine Vielzahl von Komponenten eingesetzt, die jeweils unterschiedliche Funktionen innerhalb des Abgassystems erfüllen. Es sind beispielsweise Startkatalysatoren bekannt, die ein besonders kleines Volumen haben und somit schnell nach einem Kaltstart der Verbrennungskraftmaschine ihre zur katalytischen Umsetzung erforderliche Starttemperatur erreichen. Weiterhin sind beispielsweise elektrisch beheizbare Katalysatoren bekannt, die ebenfalls ein verbessertes Kaltstartverhalten des Abgassystems ermöglichen. Sogenannte Adsorber haben im Abgassystem einer Verbrennungskraftmaschine die Aufgabe, bestimmte, im Abgas enthaltene Schadstoffe für einen gewissen Zeitraum zu adsorbieren, wobei diese vorzugsweise so lange gespeichert werden, bis ein nachgeschalteter Katalysator seine Betriebstemperatur erreicht hat. Insbesondere in Abgassystemen von Dieselmotoren werden zudem Partikelfallen beziehungsweise Partikelfilter eingesetzt, welche im Abgas enthaltene Rußpartikel auffangen, wobei die aufgefangenen Partikelansammlungen kontinuierlich oder diskontinuierlich umgesetzt werden, beispielsweise durch Zufuhr hoher thermischer Energie.

Aus der WO-A-00/34632 ist ein Abgasbehandlungssystem bekannt, bei dem zwei Katalysator-Trägerkörper und ein Russfilter ausgebildet sind. Ein erster Katalysator-Trägerkörper dient der Oxidation von Kohlenwasserstoffen, während ein zweiter Katalysator-Trägerkörper eine Umsetzung von NO zu NO₂ katalysiert.

Aufgabe der vorliegenden Erfindung ist es, ein Abgassystem zur Reinigung eines Abgases einer Verbrennungskraftmaschine anzugeben, insbesondere zur Reinigung von Abgasen eines Dieselmotors eines Automobils, welches eine besonders effektive Umsetzung von im Abgas enthaltenen Schadstoffen gewährleistet, wobei eine kontinuierliche Regeneration einer im Abgassystem angeordneten Partikelfalle sichergestellt ist.

Diese Aufgabe wird gelöst durch ein Abgassystem mit den Merkmalen des Anspruchs 1. Weitere vorteilhafte Ausgestaltungen des Abgassystems sind in den abhängigen Ansprüchen beschrieben.

Das erfindungsgemäße Abgassystem zur Reinigung eines Abgases einer Verbrennungskraftmaschine, insbesondere eines Dieselmotors eines Automobils, ist von dem Abgas in einer Strömungsrichtung durchströmbar, wobei das Abgassystem in Strömungsrichtung hintereinander folgende Komponenten aufweist:
1. einen katalytischen Konverter zur Umsetzung von im Abgas enthaltenen Kohlenmonoxiden und Kohlenwasserstoffen,
2. einen Oxidationskatalysator zur Umsetzung von im Abgas enthaltenem Stickstoffmonoxid, und
3. eine Partikelfalle zum Auffangen von im Abgas enthaltenen Partikeln.

Die Partikelfalle weist frei durchgängige Kanäle auf, in denen Verwirbelungsstellen und Beruhigungsstellen und/oder Umlenkeinrichtungen angeordnet sind.

Die vorgeschlagene Anordnung der genannten Komponenten in dem Abgassystem hat besonders positive Effekte im Hinblick auf die Regeneration der Partikelfalle. Diese positiven Effekte ergeben sich in unerwarteter Weise aus dieser Hintereinanderschaltung der oben genannten Komponenten, wie im folgenden genauer erläutert wird.

Der stromaufwärts angeordnete katalytische Konverter dient insbesondere der Umsetzung von Kohlenmonoxiden und Kohlenwasserstoffen. Der Kohlenmonoxid-Anteil im Abgas von Dieselmotoren ist insgesamt relativ niedrig und steigt lediglich bei Annäherung an die Rußgrenze stärker an. Dies hat seinen Ursprung insbesondere in der zumeist mageren (mit Luftüberschuss) Betriebsstrategie des Dieselmotors im Hinblick auf die Verbrennung des Kraftstoffs. Dabei werden erhöhte Kohlenwasserstoff-Anteile beispielsweise in zu stark abgemagerten Bereichen des Kraftstoff-Luftgemisches verursacht, die bei niedrigen Temperaturen im Brennraum (Teillast) nicht rechtzeitig umgesetzt werden können. Ein Anstieg der Kohlenwasserstoff-Anteile im Abgas ist auch bei zeitweise sehr fetter (mit Luftmangel) Verbrennung gegeben. Der katalytische Konverter setzt, insbesondere bei einer motornahen Anordnung, bevorzugt ganz bestimmte im Abgas enthaltenen Schadstoffe (insbesondere Kohlenmonoxid und ungesättigte Kohlenwasserstoffe) um, wobei diese Prozesse durch die hohen Temperaturen in Motornähe schnell und nahezu vollständig ablaufen.

Aufgrund der Tatsache, dass der katalytische Konverter bereits den wesentlichen Anteil von Kohlenmonoxiden und ungesättigten Kohlenwasserstoffen umgesetzt hat, dient der Oxidationskatalysator stromabwärts insbesondere der Umsetzung von noch im Abgas enthaltenen Stickoxiden. Stickoxide treten insbesondere bei einer nahezu stöchiometrischen Verbrennung bis hin zu einem mittleren Luftüberschuss (etwa bis λ = 3) verstärkt auf. Dabei beträgt der Stickstoffdioxid-Anteil im Abgas üblicherweise zwischen 5 und 15 %. Der Oxidationskatalysator weist nun eine katalytisch aktive Beschichtung auf, die eine Konvertierung der Stickstoffmonoxide in Stickstoffdioxide bewirkt. Somit wird der Stickstoffdioxid-Anteil im Abgas deutlich erhöht, vorzugsweise auf einen Anteil im Abgas von größer 50%, insbesondere höher 80% oder sogar 95%. Solche Umsatzraten werden dabei erreicht, weil der stromaufwärts angeordnete katalytische Konverter weitere Schadstoffe bereits im wesentlichen in unschädliche Bestandteile umgewandelt hat. Der vom Oxidationskatalysator so erzeugte hohe Stickstoffdioxid-Anteil hat besonders positive Wirkung im Hinblick auf die Regeneration der stromabwärts angeordneten Partikelfalle.

Partikel und insbesondere Ruß treten im Abgas bei der Verbrennung des Kraftstoffes unter extremem Luftmangel auf und sind aufgrund des örtlich sehr inhomogenen Kraftstoff-Luft-Gemisches typisch für die Verbrennung im Dieselmotor. Die Partikel lagern sich üblicherweise oft an den Beschichtungen der Komponenten und/oder an der Außenwand, wie zum Beispiel im Abgasstrang, des Abgassystems ab. Bei Laständerungen werden sie dann in Form einer Partikelwolke ausgestoßen. Diese Partikel werden mit der, erfindungsgemäß stromabwärts angeordneten, Partikelfalle aufgrund von Diffusions- und Adsorptionsvorgängen zurückgehalten und kontinuierlich chemisch umgesetzt. rückgehalten und kontinuierlich chemisch umgesetzt. Dadurch ist eine kontinuierliche Regeneration der Partikelfalle sichergestellt und ein Verstopfen der Strömungswege im Inneren der Partikelfalle verhindert. Dieser Regenerationsprozess wird in überraschend effektiver Weise durch das zuvor vom Oxidationskatalysator erzeugte Stickstoffdioxid begünstigt. Folglich wird einerseits eine effektive Umsetzung der Rußpartikel sichergestellt und andererseits ein Druckanstieg im Abgassystem aufgrund verstopfter Strömungswege vermieden. Bevorzugt ist dabei die Anordnung aller Komponenten in Motomähe, d.h. insbesondere nicht am Unterboden eines Automobils. Somit werden über die Betriebsdauer der Verbrennungskraftmaschine ausreichend hohe Temperaturen gewährleistet (auch direkt nach einem Kaltstart), so dass die derzeit geltenden Abgasrichtwerte hinsichtlich der einzelnen, im Abgas verbleibenden Schadstoffe deutlich unterschritten werden.

Weiterhin ist die Partikelfalle in Strömungsrichtung unmittelbar hinter dem Oxidationskatalysator angeordnet, vorzugsweise mit einem Abstand kleiner als 50 mm, insbesondere sogar kleiner als 20 mm. Bei einer solchen Ausgestaltung des Abgassystems ist es besonders vorteilhaft, den Oxidationskatalysator und die Partikelfalle in einem gemeinsamen Gehäuse unterzubringen. Dies erlaubt eine besonders platzsparende Anordnung von Oxidationskatalysator und Partikelfalle, wobei dies insbesondere in Hinblick auf eine motomahe Anordnung des Abgassystems von Bedeutung ist.

Gemäß einer weiteren Ausgestaltung des Abgassystems weist dieses einen Turbolader auf, wobei der katalytische Konverter in Strömungsrichtung vor und der Oxidationskatalysator nach dem Turbolader angeordnet sind. Die Aufladung ist ein Verfahren zur Leistungssteigerung eines Verbrennungsmotors, welches insbesondere in Verbindung mit Dieselmotoren verwendet wird. Bei der Aufladung wird durch eine Arbeitsmaschine, die für den motorischen Verbrennungsprozess benötigte Luft verdichtet, so dass pro Arbeitsspiel der Verbrennungskraftmaschine eine größere Luftmasse in den Zylinder bzw. Brennraum gelangt. Der Verdichter wird hierzu beispielsweise von einem Turbolader angetrieben, der die Abgasenergie ausnutzt. Die Kopplung mit dem Motor ist dabei nicht mechanisch, sondern verläuft rein thermisch, wobei im Automobilbau hauptsächlich das Prinzip der Stauaufladung angewandt wird. Die Anordnung des katalytischen Konverters stromaufwärts eines derartigen Turboladers gewährleistet ein sehr schnelles Erreichen der Betriebstemperatur des katalytischen Konverters, da auf diese Weise eine Wärmeabfuhr des Abgases aufgrund des Kontaktes mit Bauteilen des Turboladers vermieden wird. Zudem wird die motornahe Anordnung des katalytischen Konverters sichergestellt. Dabei ist es besonders vorteilhaft, dass der katalytische Konverter direkt mit der Verbrennungskraftmaschine verbunden und insbesondere in einem Abgaskrümmer angeordnet ist. Auch ist es möglich mehrere kleine Konverter jeweils in einen getrennten Abgasstrang eines Abgaskrümmers einzubauen, wobei diese vorzugsweise direkt an/mit der Verbindungsstelle von Abgaskrümmer und Verbrennungskraftmaschine befestigt sind. Aufgrund der Nähe zu den Brennräumen beziehungsweise den Zylindern der Verbrennungskraftmaschine wird das thermische Anspringverhalten des katalytischen Konverters deutlich unterstützt.

Gemäß noch einer weiteren Ausgestaltung des Abgassystems weist der Oxidationskatalysator mindestens zwei Zonen auf, wobei die von der Verbrennungskraftmaschine am weitesten entfernte Zone mit einer höheren spezifischen Wärmekapazität ausgeführt ist als die restlichen der mindestens zwei Zonen. Der Oxidationskatalysator weist üblicherweise eine Wabenstruktur auf, wobei Trennwände für ein Abgas durchströmbare Kanäle bilden. Die Erhöhung der spezifischen Wärmekapazität (insbesondere der oberflächenspezifischen Wärmekapazität) kann beispielsweise durch eine dickere Ausführung der Trennwände gewährleistet werden. Haben die Trennwände beispielsweise in der stromaufwärts angeordneten Zone des Oxidationskatalysators eine Dicke kleiner 0,03 mm, so weisen die Trennwände in einer mittleren Zone eine Dicke von etwa 0,03 bis 0,06 mm auf, wobei eine stromabwärts angeordnete Zone zum Beispiel mit einer Dicke der Trennwände ausgeführt ist, die mindestens 0,08 mm beträgt. Die Anzahl der Zonen sowie die Dicke der Trennwände ist insbesondere in Hinblick auf die Zusammensetzung des Abgases und dessen thermische Energie auszurichten. Die in Strömungsrichtung zunehmende spezifische Wärmekapazität hat zur Folge, dass der Oxidationskatalysator in stromaufwärts angeordneten Zonen bereits sehr frühzeitig seine Betriebstemperatur erreicht, wobei die dort angestoßene katalytische Reaktion soviel exotherme Energie liefert, dass die stromabwärts angeordneten Zonen ebenfalls schnell aufgeheizt werden. Dabei stellt die Zone mit der hohen Wärmekapazität auch nach dem Abschalten der Verbrennungskraftmaschine eine Art Wärmespeicher dar, der beispielsweise die Kaltstartphase nach einem Wiederstart deutlich verkürzt.

Gemäß einer weiteren Ausgestaltung weist die Partikelfalle ein Gesamtvolumen (Wände plus Hohlräume) auf, das kleiner als 75 % eines Hubraumvolumens der Verbrennungskraftmaschine ist, insbesondere kleiner 50% und bevorzugt sogar kleiner 25%. Unter Umständen, wie beispielsweise bei motornaher Anordnung und/oder einer sehr kurzzeitigen, diskontinuierlichen Regeneration der Partikelfalle kann das Gesamtvolumen auch noch weiter verkleinert werden, gegebenenfalls bis zu einer Größe kleiner 5% oder 1 % des Hubraumvolumens der Verbrennungskraftmaschine. Mit Hubraumvolumen ist dabei die Summe der Volumina der Zylinder bzw. Brennräume der Verbrennungskraftmaschine gemeint, in denen die Verbrennung des Kraftstoffs stattfindet.

Die Partikelfalle weist somit ein sehr kleines Gesamtvolumen auf, wobei einerseits eine platzsparende Anordnung und andererseits eine effektive chemische Umsetzung der Partikel gewährleistet wird. Die Partikelfalle kann insbesondere dadurch so klein ausgeführt werden, da der stromaufwärts angeordnete Oxidationskatalysator soviel Stickstoffdioxid produziert, dass eine kontinuierliche Regeneration der Partikelfalle sichergestellt und ein großes Speichervolumen für noch umzusetzende Rußpartikel nicht erforderlich ist.

Dabei ist es besonders vorteilhaft, dass die Partikelfalle frei durchgängige Kanäle aufweist, in denen Verwirbelungsstellen und Beruhigungsstellen und/oder Umlenkeinrichtungen angeordnet sind. Dadurch wird in einfacher Weise die Wahrscheinlichkeit zur Reaktion von Partikeln mit Stickstoffoxid erhöht, in dem die Verweilzeit von Partikeln (insbesondere Ruß) in der Partikelfalle verlängert wird. Dies geschieht bei an sich frei durchgängigen Strömungswegen durch eine genügende Anzahl von Verwirbelungs- und Beruhigungsstellen und/oder durch Umlenkungen, die die Ablagerung der Partikel an den Wänden begünstigen. Während ein mit dem Abgasstrom fliegendes Partikel nur geringe Chancen für die Reaktion mit anderen Abgasbestandteilen hat, erhöhen sich diese Chancen drastisch, wenn das Partikel in einer Verwirbelungs- oder Beruhigungsstelle aufgehalten oder an einer Trennwand abgelagert wird. Alle vorbeikommenden Stickstoffdioxide kommen dann für eine Reaktion in Frage und bauen so die Partikel schnell ab. Die Partikelfalle kann daher nicht verstopfen, sondern wird stetig regeneriert.

Gemäß einer weiteren Ausgestaltung weist der katalytische Konverter ein Konvertervolumen auf, das höchstens halb so groß ist, wie ein Katalysatorvolumen des Oxidationskatalysators. Mit dem Konvertervolumen und dem Katalysatorvolumen sind jeweils die Außenvolumina (Wände plus Kanäle) des mindestens einen Konverters beziehungsweise des Oxidationskatalysators gemeint. Eine so kleine Ausführung des katalytischen Konverters unterstützt das Anspringverhalten sowie eine platzsparende Anordnung.

Gemäß noch einer weiteren Ausgestaltung des Abgassystems weist mindestens eine, vorzugsweise jede Komponente des Abgassystems eine Wabenstruktur mit für ein Abgas durchströmbaren Kanälen auf, die mit zumindest teilweise strukturierten Blechfolien gebildet ist. Die Wabenstruktur des Konverters und/oder des Oxidationskatalysators weist dabei mindestens eine Kanaldichte von 600 cpsi ("cells per square inch"), insbesondere größer 1000 cpsi auf Die Partikelfalle benötigt gegebenenfalls etwas größere Kanalquerschnitte, so dass diese mit einer Kanaldichte größer 200 cpsi, insbesondere 400 cpsi oder 600 cpsi auszuführen ist, wobei stets ausreichen Oberfläche zur Anlagerung der Partikel zur Verfügung gestellt wird. Ist der Oxidationskatalysator mit einer solchen Blechfolien umfassenden Wabenstruktur ausgeführt, so weisen die Blechfolien vorzugsweise eine Dicke kleiner als 0,06 mm, insbesondere kleiner 0,03 mm auf.

Das erfindungsgemäße Abgassystem wird nun anhand der in den Zeichnungen dargestellten besonders bevorzugten Ausführungsformen ausführlich erläutert. Es zeigen:
- Fig. 1: eine Ausführungsform des Abgassystems,
- Fig. 2: eine Draufsicht auf eine Komponente des Abgassystems mit einer Wabenstruktur,
- Fig. 3: eine Ausführungsform der Partikelfalle des Abgassystems in einer schematischen Detailansicht, und
- Fig. 4: eine weitere Ausführungsform des Abgassystems in motomaher Anordnung.

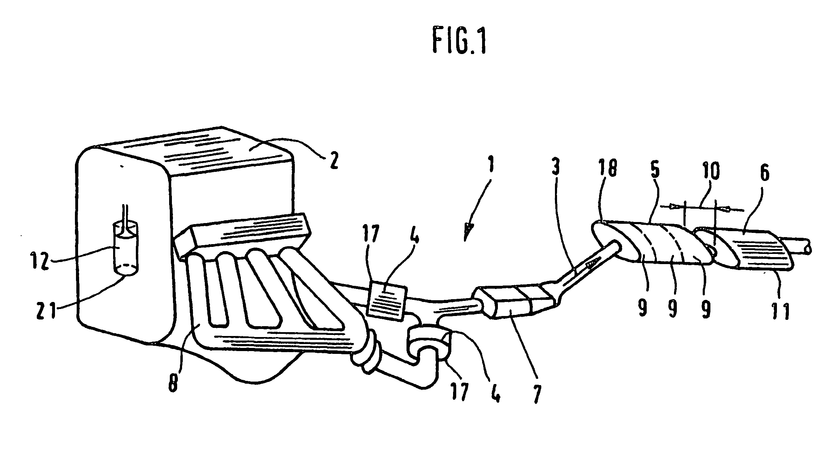

Figur 1 zeigt schematisch und perspektivisch ein Abgassystem 1 zur Reinigung eines Abgases eines Dieselmotors. Dabei strömt das Abgas ausgehend von der Verbrennungskraftmaschine 2 bzw. dem Dieselmotor durch das Abgassystem 1 mit einer bevorzugten Strömungsrichtung 3. Das Abgassystem 1 umfasst in Strömungsrichtung 3 hintereinander einen katalytischen Konverter 4, insbesondere zur Umsetzung von im Abgas enthaltenen Kohlenmonoxiden und Kohlenwasserstoffen, einen Oxidationskatalysator 5, insbesondere zur Umsetzung von im Abgas enthaltenen Stickstoffmonoxiden, und eine Partikelfalle 6 zum Auffangen von im Abgas enthaltenen Partikeln, insbesondere Ruß. Da das dargestellte Abgassystem 1 teilweise mehrere Abgasstränge stromaufwärts eines Turboladers 7 aufweist, ist die dargestellte Ausführungsform mit zwei katalytischen Konvertern 4 ausgestattet, die sehr nahe an der Verbrennungskraftmaschine 2 angeordnet sind. Dabei ist es auch möglich, die katalytischen Konverter 4 in den Abgassträngen einen bzw. mehrerer Abgaskrümmer 8 anzuordnen, der direkt mit der Verbrennungskraftmaschine 2 verbunden ist. Der dargestellte Oxidationskatalysator 5 weist mehrere Zonen 9 auf, wobei die Zonen 9 in Strömungsnchtung 3 des Abgases eine zunehmende spezifische Wärmekapazität aufweisen. Mit einem Abstand 10 kleiner als 50 mm ist die Partikelfalle 6 in Strömungsrichtung 3 unmittelbar hinter dem Oxidationskatalysator 5 angeordnet. Die Partikelfalle 6 weist dabei ein Gesamtvolumen 11 auf, das vorzugsweise kleiner als 75 % eines Hubraumvolumens 12 der Verbrennungskraftmaschine 2 ist. Das Hubraumvolumen 12 entspricht der Summe der einzelnen Volumina der Zylinder 21 der Verbrennungskraftmaschine 2. Weiterhin sind die katalytischen Konverter 4 mit einem Konvertervolumen 17 ausgeführt, das höchstens halb so groß ist, wie ein Katalysatorvolumen 18 des Oxidationskatalysators 5. Hierbei ist mit dem Konvertervolumen 17 die Summe der Volumina der katalytischen Konverter 4 gemeint.

Das dargestellte Abgassystem 1 ist vorzugsweise in direkter Nähe der Verbrennungskraftmaschine 2 anzuordnen. Dabei ist insbesondere zu vermeiden, dass eine der Komponenten 4, 5, 6 im Unterboden eines Automobils angeordnet ist.

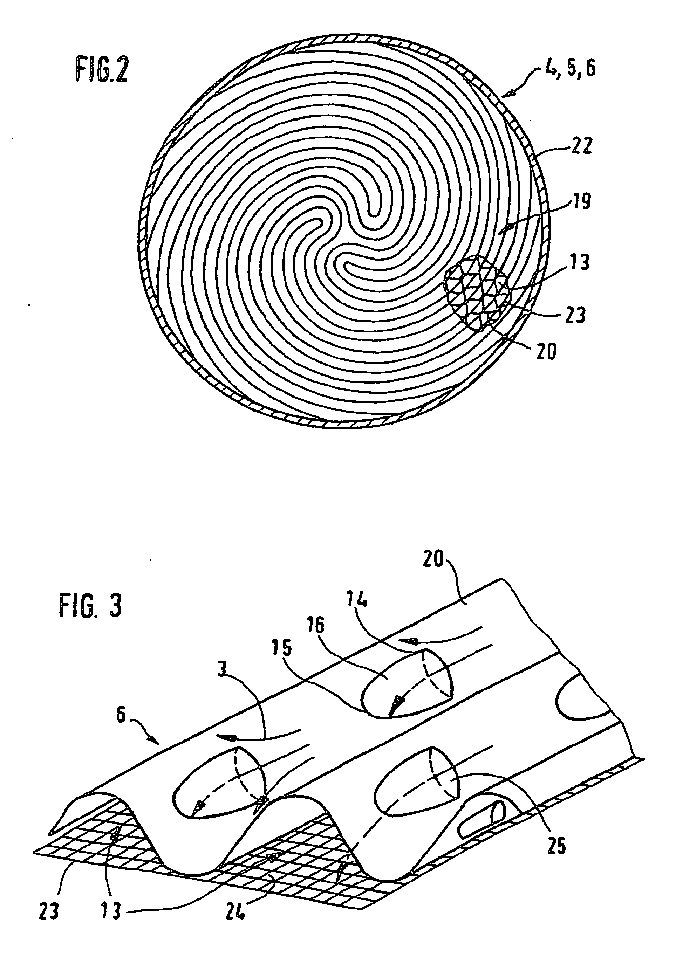

Figur 2 zeigt eine Draufsicht auf einen katalytischen Konverter 4 beziehungsweise einen Oxidationskatalysator 5 mit einer Wabenstruktur 19. Die Wabenstruktur 19 weist für ein Abgas durchströmbare Kanäle 13 auf, die mit zumindest teilweise strukturierten Blechfolien 20 gebildet ist. Hierzu wurden glatte Blechfolien 23 und strukturierte Blechfolien 20 zunächst gestapelt und anschließend miteinander verwunden, wobei die Wabenstruktur 19 zur Erhöhung der Stabilität der Komponente in einem Mantelrohr 22 angeordnet sind. Die Wabenstruktur 19 ist bevorzugt mit einer katalytischen Beschichtung ausgeführt, die sich insbesondere durch eine sehr zerklüftete Oberfläche und folglich auch durch eine hohe Effektivität betreffend die Schadstoffumsetzung auszeichnet.

Figur 3 zeigt schematisch und perspektivisch eine Detailansicht einer Partikelfalle 6. Die Partikelfalle 6 ist aus einer strukturierten Blechfolie 20 und einer glatten Blechfolie 23 mit Durchbrechungen 24 aufgebaut und bildet frei durchgängige Kanäle 13. Flügelähnliche Umlenkeinrichtungen 16 mit Öffnungen 25 führen zu den Effekten, wie sie oben beschrieben sind. Die Umlenkeinrichtungen 16 weisen Beruhigungsstellen 15 und Verwirbelungsstellen 14 auf, wobei die Umlenkeinrichtungen 16 das Abgas verwirbeln, so dass sich die Partikel länger in der Partikelfalle 6 aufhalten und somit leichter mit anderen Bestandteilen des Abgases reagieren können. Je nach der genauen Ausgestaltung der Umlenkeinrichtungen 16 werden auch Partikel gegen die Blechfolien 20 und 23 geschleudert, wo diese haften bleiben. Dort werden die Rußpartikel mit dem durchströmenden Stickstoffdioxid so effektiv und kontinuierlich chemisch umgesetzt, dass eine freie Durchströmung der Kanäle zu jedem Zeitpunkt gewährleistet ist.

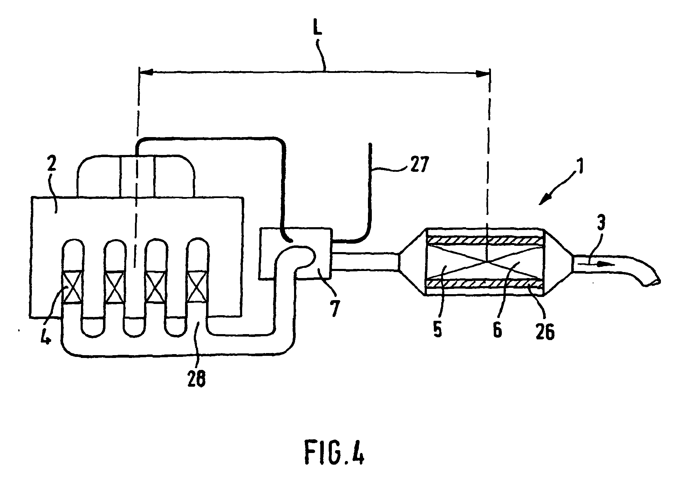

Fig. 4 zeigt schematisch eine weitere Ausgestaltung des Abgassystems 1 in motomaher 2 Anordnung. Das Abgassystem 1 dient zur Reinigung eines Abgases einer Verbrennungskraftmaschine 2, insbesondere eines Dieselmotors eines Automobils, und wird von dem Abgas in einer Strömungsrichtung 3 durchströmt. Das Abgassystem 1 weist in Strömungsrichtung 3 hintereinander mindestens einen katalytischen Konverter 4, insbesondere zur Umsetzung von im Abgas enthaltenen Kohlenmonoxiden und Kohlenwasserstoffen, einen Oxidationskatalysator 5, insbesondere zur Umsetzung von im Abgas enthaltenen Stickstoffmonoxid, und eine Partikelfalle 6 zum Auffangen von im Abgas enthaltenen Partikeln auf. In der dargestellten Ausführungsform sind die katalytischen Konverter 4 besonders nah an den Brennräumen des Motors angeordnet, speziell ist in jedem Auslass der Brennräume im Abgaskrümmer 28 jeweils ein kleiner katalytischen Konverter 4 angeordnet. Damit sind die katalytischen Konverter 4 sogar noch dem Turbolader 7, der insbesondere als Abgasturbolader ausgeführt ist, vorgeschaltet, der zur Verdichtung der dem Motor zugeführten Frischluft (Frischluftzufuhr 27) dient.

Bei dem dargestellten Abgassystem 1 sind der Oxidationskatalysator 5 und die Partikelfalle 6 in einem gemeinsamen Gehäuse 26 angeordnet. Die Partikelfalle 6 hat ein Gesamtvolumen 11, das kleiner als 75% eines Hubraumvolumen 12 der Verbrennungskraftmaschine 2 ist, insbesondere kleiner 50% und bevorzugt sogar kleiner als 25%. Damit möglichst hohe Temperaturen zur Regenerierung der Partikelfalle 6 während des Betriebes der Verbrennungskraftmaschine 2 und der Abgasanlage 1 vorliegen, ist die Partikelfalle 6 in einer Distanz vom Motor angeordnet, die bevorzugt kleiner 80cm beträgt. Dabei ist mit der Distanz bevorzugt die Weglänge des Abgases bis zum Erreichen der Partikelfalle 6 gemeint.

Das erfindungsgemäße Abgassystem gewährleistet eine sehr effektive Umsetzung von im Abgas eines Dieselmotors enthaltenen Schadstoffen (insbesondere Kohlenmonoxid, ungesättigten Kohlenwasserstoffen, Stickoxiden, Ruß), wobei zusätzlich ein besonders positiver Effekt in Hinblick auf die Regenerierung der Partikelfalle auftritt. Genauer gesagt, hat die erhöhte Stickstoff-Dioxid-Produktion des Oxidationskatalysators wegen des vorgeschalteten katalytischen Konverters zur Folge, dass der Partikelfalle eine ausreichende Menge an Stickstoffdioxid zur Verfügung gestellt wird, um eine kontinuierliche Regenerierung zu gewährleisten. Dadurch werden verstopfte Kanäle verhindert und die derzeit geltenden Abgasgrenzwerte deutlich unterschritten.

### Bezugszeichenliste

- 1: Abgassystem
- 2: Verbrennungskraftmaschine
- 3: Strömungsrichtung
- 4: Konverter
- 5: Oxidationskatalysator
- 6: Partikelfalle
- 7: Turbolader
- 8: Abgaskrümmer
- 9: Zone
- 10: Abstand
- 11: Gesamtvolumen
- 12: Hubraumvolumen
- 13: Kanal
- 14: Verwirbelungsstelle
- 15: Beruhigungsstelle
- 16: Umlenkeinrichtung
- 17: Konvertervolumen
- 18: Katalysatorvolumen
- 19: Wabenstruktur
- 20: strukturierte Blechfolie
- 21: Zylinder
- 22: Mantelrohr
- 23: glatte Blechfolie
- 24: Durchbrechung
- 25: Öffnung
- 26: Gehäuse
- 27: Frischluftzufuhr
- 28: Abgaskrümmer
Distanz

## Patentansprüche

1. Abgassystem (1) zur Reinigung eines Abgases einer Verbrennungskraftmaschine (2), insbesondere eines Dieselmotors eines Automobils, das von dem Abgas in einer Strömungsrichtung (3) durchströmbar ist, wobei das Abgassystem (1) in Strömungsrichtung (3) hintereinander einen katalytischen Konverter (4) zur Umsetzung von im Abgas enthaltenen Kohlenmonoxiden und Kohlenwasserstoffen, einen Oxidationskatalysator (5) zur Umsetzung von im Abgas enthaltenen Stickstoffmonoxid, und eine Partikelfalle (6) zum Auffangen von im Abgas enthaltenen Partikeln umfasst, wobei die Partikelfalle (6) frei durchgängige Kanäle (13) aufweist, in denen Verwirbelungsstellen (14) und Beruhigungsstellen (15) und/oder Umlenkeinrichtungen (16) angeordnet sind und die Partikelfalle (6) in Strömungsrichtung (3) unmittelbar hinter dem Oxidationskatalysator (5) angeordnet ist, vorzugsweise mit einem Abstand (10) kleiner als 50 mm, insbesondere sogar kleiner als 20 mm.

2. Abgassystem (1) nach Anspruch 1, wobei das Abgassystem (1) einen Turbolader (7) aufweist, **dadurch gekennzeichnet, dass** der katalytische Konverter (4) in Strömungsrichtung (3) vor und der Oxidationskatalysator (5) nach dem Turbolader (7) angeordnet sind.

3. Abgassystem (1) nach Anspruch 1 oder 2, **dadurch gekennzeichnet, dass** der katalytische Konverter (4) nahe der Verbrennungskraftmaschine (2) angeordnet ist, insbesondere in einem Abgaskrümmer (8), der direkt mit der Verbrennungskraftmaschine (2) verbunden ist.

4. Abgassystem (1) nach einem der Ansprüche 1 bis 3, **dadurch gekennzeichnet, dass** der Oxidationskatalysator (5) mindestens zwei Zonen (9) aufweist, wobei die von der Verbrennungskraftmaschine (2) am weitesten entfernte Zone (9) mit einer höheren spezifischen Wärmekapazität ausgeführt ist als die restlichen der mindestens zwei Zonen (9).

5. Abgassystem (1) nach einem der Ansprüche 1 bis 4, **dadurch gekennzeichnet, dass** der Oxidationskatalysator (5) und die Partikelfalle (6) in einem gemeinsamen Gehäuse (26) angeordnet sind.

6. Abgassystem (1) nach einem der Ansprüche 1 bis 5, **dadurch gekennzeichnet, dass** die Partikelfalle (6) ein Gesamtvolumen (11) hat, das kleiner als 75% eines Hubraumvolumen (12) der Verbrennungskraftmaschine (2) ist, insbesondere kleiner 50% und bevorzugt sogar kleiner als 25%.

7. Abgassystem (1) nach einem der Ansprüche 1 bis 6, **dadurch gekennzeichnet, dass** der katalytische Konverter (4) ein Konvertervolumen (17) auf weist, das höchstens halb so groß ist, wie ein Katalysatorvolumen (18) des Oxidationskatalysators (5).

8. Abgassystem (1) nach einem der Ansprüche 1 bis 7, **dadurch gekennzeichnet, dass** mindestens eine, vorzugsweise jede Komponente (4, 5, 6) des Abgassystems (1) eine Wabenstruktur (19) mit für ein Abgas durchströmbaren Kanälen (13) aufweist, die mit zumindest teilweise strukturierten Blechfolien (20) gebildet ist.

## Claims

1. Exhaust system (1) for purifying an exhaust gas of an internal combustion engine (2), in particular of a diesel engine of an automobile, through which the exhaust gas can flow in a direction of flow (3), the exhaust system (1), in the direction of flow (3), successively comprising a catalytic converter (4) for converting carbon monoxides and hydrocarbons contained in the exhaust gas, an oxidation catalytic converter (5) for converting nitrogen monoxide contained in the exhaust gas, and a particulate trap (6) for collecting particulates contained in the exhaust gas, wherein the particulate trap (6) has freely accessible passages (13), in which turbulence points (14) and calming points (15) and/or diverter devices (16) are arranged and the particulate trap (6) is arranged immediately behind the oxidation catalytic converter (5), as seen in the direction of flow (3), preferably having a distance (10) smaller than 50 mm, in particular even smaller than 20 mm.

2. Exhaust system (1) as claimed in claim 1, the exhaust system (1) having a turbocharger (7), **characterized in that** the catalytic converter (4) is arranged upstream of the turbocharger (7), and the oxidation catalytic converter (5) is arranged downstream of the turbocharger (7), as seen in the direction of flow (3).

3. Exhaust system (1) as claimed in claim 1 or 2, **characterized in that** the catalytic converter (4) is arranged close to the internal combustion engine (2), in particular in an exhaust manifold (8) which is directly connected to the internal combustion engine (2).

4. Exhaust system (1) as claimed in one of claims 1 to 3, **characterized in that** the oxidation catalytic converter (5) has at least two zones (9), the zone (9) which is furthest away from the internal combustion engine (2) being designed with a higher specific heat capacity than the remaining ones of the at least two zones (9).

5. Exhaust system (1) as claimed in one of claims 1 to 4, **characterized in that** the oxidation catalytic converter (5) and the particulate trap (6) are arranged in a common housing (26).

6. Exhaust system (1) as claimed in one of claims 1 to 5, **characterized in that** the particulate trap (6) has a total volume (11) which is less than 75% of a displacement (12) of the internal combustion engine (2), in particular less than 50% and preferably even less than 25%.

7. Exhaust system (1) as claimed in one of claims 1 to 6, **characterized in that** the catalytic converter (4) has a converter volume (17) which is at most half a catalytic converter volume (18) of the oxidation catalytic converter (5).

8. Exhaust system (1) as claimed in one of claims 1 to 7, **characterized in that** at least one, and preferably each, component (4, 5, 6) of the exhaust system (1) has a honeycomb structure (19) with passages (13) through which an exhaust gas can flow, which honeycomb structure is formed with at least partially structured metal foils (20).

## Revendications

1. Système de gaz d'échappement (1) pour purifier un gaz d'échappement d'une machine à combustion interne (2), notamment d'un moteur diesel d'un automobile, qui peut être traversé dans un sens d'écoulement (3) par le gaz d'échappement, dans quel cas le système de gaz d'échappement (1) comporte dans le sens d'écoulement (3) successivement un convertisseur catalytique (4), notamment pour transformer des monoxydes de carbone et des hydrocarbones contenus dans le gaz d'échappement, un catalyseur d'oxydation (5), pour la transformation de monoxyde d'azote contenu dans le gaz d'échappement, et un piège de particules (6) pour recueillir des particules contenus dans le gaz d'échappement, le piège de particules (6) ayant des canaux (13) librement accessibles, dans lesquels des points de tourbillonnement (14) et des points d'apaisement (15) et/ou des dispositifs de déviation (16) sont agencés et le piège de particules (6) étant agencé en direction d'écoulement (3) directement derrière le catalyseur d'oxydation (5), de préférence avec une distance (10) plus courte que 50 mm, notamment même plus courte que 20 mm.

2. Système de gaz d'échappement (1) selon la revendication 1, le système de gaz d'échappement (1) présentant un chargeur turbo (7), **caractérisé en ce que** le convertisseur catalytique (4) est agencé en amont du chargeur turbo (7) et le catalyseur d'oxydation (5) en aval du chargeur turbo (7) dans le sens d'écoulement (3).

3. Système de gaz d'échappement (1) selon la revendication 1 ou 2, **caractérisé en ce que** le convertisseur catalytique (4) est agencé près de la machine à combustion interne (2), notamment dans un collecteur d'échappement (8) qui est relié directement à la machine à combustion interne (2).

4. Système de gaz d'échappement (1) selon l'une des revendications 1 à 3, **caractérisé en ce que** le catalyseur d'oxydation (5) a au moins deux zones (9), dans quel cas la zone (9), qui est la plus éloignée de la machine à combustion interne (2), est réalisée avec une capacité thermique spécifique plus élevée que les zones résiduelles des au moins deux zones (9).

5. Système de gaz d'échappement (1) selon l'une des revendications 1 à 4, **caractérisé en ce que** le catalyseur d'oxydation (5) et le piège de particules (6) sont agencés dans un boîtier (26) commun.

6. Système de gaz d'échappement (1) selon l'une des revendications 1 à 5, **caractérisé en ce que** le piège de particules (6) a un volume total (11) qui est plus petit que 75 % d'un volume de cylindrée (12) de la machine à combustion interne (2), notamment plus petit que 50 % et de préférence même plus petit que 25 %.

7. Système de gaz d'échappement (1) selon l'une des revendications 1 à 6, **caractérisé en ce que** le convertisseur catalytique (4) a un volume de convertisseur (17) qui comporte au plus la moitié d'un volume de catalyseur (18) du catalyseur d'oxydation (5).

8. Système de gaz d'échappement (1) selon l'une des revendications 1 à 7, **caractérisé en ce qu'**au moins un composant, de préférence chaque composant (4, 5, 6) du système de gaz d'échappement (1), a une structure en nids d'abeilles (19) avec des canaux (13) pouvant être traversés par un gaz d'échappement, laquelle structure en nids d'abeilles est formée avec des feuilles de tôle au moins structurées partiellement (20).
